# EUROPEAN PATENT APPLICATION

(11) **EP 4 765 293 A1**
(43) Date of publication of application: **24.06.2026**
(21) Application number: 23948821.6
(22) Date of filing: 15.08.2023
(51) Int. Cl.: H01M 10/058, H01M 10/0525, H01M 4/136, H01M 4/131, H01M 10/42, H01M 4/36

(54) **ELECTROCHEMICAL APPARATUS AND ELECTRONIC APPARATUS**

(71) Applicant: Xiamen Ampack Technology Limited, Xiamen City, Fujian Province, 361000 (CN)
(72) Inventor: CAI, Yangsheng, Xiamen, Fujian 361000 (CN)
(74) Representative: Kraus & Lederer PartGmbB
(86) International application number: PCT/CN2023/113125
(87) International publication number: WO 2025/035390

(57) **Abstract**

An electrochemical apparatus and an electronic apparatus are provided. In the electrochemical apparatus, a first positive electrode active material layer is disposed on a surface of a positive electrode current collector, and a second positive electrode active material layer is located on a surface of the first positive electrode active material layer away from the positive electrode current collector. A first positive electrode active material in the first positive electrode active material layer includes at least one of lithium cobalt oxide, lithium nickel cobalt manganese oxide, lithium nickel cobalt aluminum oxide, or lithium manganese oxide, and a second positive electrode active material in the second positive electrode active material layer includes at least one of lithium iron manganese phosphate or lithium iron phosphate. Along a width direction of an unfolded positive electrode plate, the first positive electrode active material layer includes a first end face and a third end face opposite to the first end face, the second positive electrode active material layer includes a second end face and a fourth end face opposite to the second end face, the first end face extends beyond the second end face, and the fourth end face does not extend beyond the third end face.

## Description

### TECHNICAL FIELD

This application relates to the field of electrochemistry, in particular to an electrochemical apparatus and an electronic apparatus.

### BACKGROUND

Electrochemical apparatuses (such as lithium-ion batteries) have the characteristics of high energy density, low maintenance, low self-discharge, long cycle life, no memory effect, stable operating voltage, and environmental friendliness, and thus are widely used in portable electronic devices (such as mobile phones, laptops, and cameras), electric tools, electric vehicles, and other fields. With the rapid development of technology and the diversity of market demands, more requirements have been put forward for lithium-ion batteries, such as smaller thickness, smaller weight, higher safety performance, and higher capacity.

A positive electrode plate is an important component in a lithium-ion battery. However, in an existing positive electrode plate, the adhesion force between a positive electrode active material layer and a positive electrode current collector is insufficient, leading to a high risk of peeling of the positive electrode material layer. Based on this, it is particularly important to develop a lithium-ion battery capable of reducing the risk of peeling of the positive electrode active material layer.

### SUMMARY

This application is intended to provide an electrochemical apparatus and an electronic apparatus to guarantee the capacity of the electrochemical apparatus while reducing the risk of peeling of the positive electrode active material layer.

It should be noted that, in the summary of this application, an example in which a lithium-ion battery serves as an electrochemical apparatus is used to explain this application, but the electrochemical apparatus of this application is not limited to lithium-ion batteries. A specific technical solution is as follows.

A first aspect of this application provides an electrochemical apparatus, including a positive electrode plate. The positive electrode plate includes a positive electrode current collector and a positive electrode active material layer disposed on at least one surface of the positive electrode current collector. The positive electrode active material layer includes a first positive electrode active material layer and a second positive electrode active material layer. The first positive electrode active material layer is disposed on a surface of the positive electrode current collector, and the second positive electrode active material layer is disposed on a surface of the first positive electrode active material layer away from the positive electrode current collector. The first positive electrode active material layer includes a first positive electrode active material, and the first positive electrode active material includes at least one of lithium cobalt oxide, lithium nickel cobalt manganese oxide, lithium nickel cobalt aluminum oxide, or lithium manganese oxide. The second positive electrode active material layer includes a second positive electrode active material, and the second positive electrode active material includes at least one of lithium iron manganese phosphate or lithium iron phosphate. Along a width direction of the unfolded positive electrode plate, the first positive electrode active material layer includes a first end face and a third end face opposite to the first end face, the second positive electrode active material layer includes a second end face and a fourth end face opposite to the second end face, the first end face and the second end face are located on a first side of the positive electrode plate, the third end face and the fourth end face are located on a second side of the positive electrode plate, and the first side opposite to the second side. Along the width direction of the unfolded positive electrode plate, the first end face extends beyond the second end face, and the fourth end face does not extend beyond the third end face. In this application, due to the arrangement that along the width direction of the unfolded positive electrode plate, the first end face extends beyond the second end face and the fourth end face does not extend beyond the third end face, the possibility of contact between the second positive electrode active material layer and the positive electrode current collector is reduced, thereby reducing the risk of peeling of an edge portion of the positive electrode active material layer in the width direction. Accordingly, in this application, by controlling the types of the first positive electrode active material and the second positive electrode active material and controlling the first end face to extend beyond the second end face and the fourth end face not to extend beyond the third end face, the electrochemical apparatus guarantees its own capacity while reducing the risk of peeling of the positive electrode active material layer. Moreover, the production cost of the electrochemical apparatus is reduced.

In an embodiment of this application, along a thickness direction of the unfolded positive electrode plate, a projection of the second positive electrode active material layer on the positive electrode current collector is located within a projection of the first positive electrode active material layer on the positive electrode current collector, which may further reduce the risk of peeling of the second positive electrode active material layer.

In an embodiment of this application, along the width direction of the unfolded positive electrode plate, the positive electrode active material layer includes a main body portion and an edge portion, and the edge portion is a portion of the first positive electrode active material layer extending beyond the second positive electrode active material layer. Based on a total mass of the first positive electrode active material and the second positive electrode active material in the main body portion, a mass percentage of the second positive electrode active material is 5% to 95%.

In an embodiment of this application, based on the total mass of the first positive electrode active material and the second positive electrode active material in the main body portion, the mass percentage of the second positive electrode active material is 5% to 60%.

In an embodiment of this application, a distance by which the first end face extends beyond the second end face is m₁, and 0.2 mm ≤ m₁ ≤ 2 mm. Controlling the distance by which the first end face extends beyond the second end face within the above range enables the electrochemical apparatus to guarantee its own capacity while reducing the risk of peeling of the positive electrode active material layer, and reduces the production cost of the electrochemical apparatus.

In an embodiment of this application, a distance by which the third end face extends beyond the fourth end face is m₂, and 0.2 mm ≤ m₂ ≤ 2 mm. Controlling the distance by which the third end face extends beyond the fourth end face within the above range enables the electrochemical apparatus to guarantee its own capacity while reducing the risk of peeling of the positive electrode active material layer, and reduces the production cost of the electrochemical apparatus.

In an embodiment of this application, the first positive electrode active material layer further includes a first conductive agent and a first binder, and based on a mass of the first positive electrode active material layer, a mass percentage of the first positive electrode active material is 95% to 98%, a mass percentage of the first conductive agent is 0.5% to 3%, and a mass percentage of the first binder is 0.5% to 3%; and/or the second positive electrode active material layer further includes a second conductive agent and a second binder, and based on a mass of the second positive electrode active material layer, a mass percentage of the second positive electrode active material is 95% to 98%, a mass percentage of the second conductive agent is 0.6% to 3%, and a mass percentage of the second binder is 0.5% to 2%. Controlling percentages of the first positive electrode active material, the first conductive agent, and the first binder in the first positive electrode active material layer within the above ranges, and controlling percentages of the second positive electrode active material, the second conductive agent, and the second binder in the second positive electrode active material layer within the above ranges enable the electrochemical apparatus to guarantee its own capacity while reducing the risk of peeling of the positive electrode active material layer.

In an embodiment of this application, in the main body portion, a coating weight of the positive electrode active material layer is 200 mg/1540.24 mm² to 600 mg/1540.24 mm². Controlling the coating weight of the positive electrode active material layer within the above range may enable the positive electrode active material layer to have a large amount of positive electrode active material, thereby providing higher capacity for the electrochemical apparatus.

In an embodiment of this application, a gram capacity of the first positive electrode active material is a, and a gram capacity of the second positive electrode active material is b, satisfying: 10% ≤ (a-b)/b × 100% ≤ 75%, and 160 mAh/g ≤ a ≤ 210 mAh/g. Controlling a value of (a-b)/b × 100% and the gram capacity a of the first positive electrode active material within the above ranges helps to reduce the production cost of the electrochemical apparatus while guaranteeing the capacity of the electrochemical apparatus and reducing the risk of peeling of the positive electrode active material layer.

In an embodiment of this application, 14% ≤ (a-b)/b × 100% ≤ 30%. Controlling the value of (a-b)/b × 100% within the above range helps to further reduce the production cost of the electrochemical apparatus while guaranteeing the capacity of the electrochemical apparatus and reducing the risk of peeling of the positive electrode active material layer.

In an embodiment of this application, 120 mAh/g ≤ b ≤ 140 mAh/g.

In an embodiment of this application, the electrochemical apparatus further includes a negative electrode plate, the negative electrode plate includes a negative electrode current collector and a negative electrode active material layer disposed on at least one surface of the negative electrode current collector, and a coating weight of the negative electrode active material layer is 100 mg/1540.24 mm² to 300 mg/1540.24 mm². Controlling the coating weight of the negative electrode active material layer within the above range may provide higher capacity for the negative electrode active material layer, thereby enabling the electrochemical apparatus to have higher capacity.

In an embodiment of this application, the negative electrode active material layer includes a negative electrode active material, and a gram capacity of the negative electrode active material is 280 mAh/g to 420 mAh/g. Controlling the gram capacity of the negative electrode active material within the above range helps to provide higher capacity for the electrochemical apparatus.

In an embodiment of this application, a CB value of the electrochemical apparatus satisfies: 1.04 ≤ CB ≤ 1.2.

In an embodiment of this application, along a width direction of the positive electrode plate, the positive electrode active material layer includes a main body portion and an edge portion, the edge portion is a portion of the first positive electrode active material layer extending beyond the second positive electrode active material layer, and a CB value of the edge portion is greater than or equal to a CB value of the main body portion.

In an embodiment of this application, along a length direction of the unfolded positive electrode plate, a length of the first positive electrode active material layer is greater than a length of the second positive electrode active material layer.

A second aspect of this application provides an electronic apparatus, including the electrochemical apparatus described in any one of the above embodiments.

Beneficial effects of some embodiments of this application are as follows.

Some embodiments of this application provide an electrochemical apparatus and an electronic apparatus, where the first positive electrode active material in the electrochemical apparatus has good adhesivity and high gram capacity, and the first positive electrode active material is applied to the first positive electrode active material layer, so that sufficient adhesion force may be provided between the first positive electrode active material layer and the positive electrode current collector, reducing the risk of peeling of the positive electrode active material layer and providing higher gram capacity for the electrochemical apparatus, thereby enabling the electrochemical apparatus to have higher capacity. The second positive electrode active material has the characteristics of high gram capacity and low cost, and the second positive electrode active material is applied to the second positive electrode active material layer, which may reduce the production cost of the electrochemical apparatus while guaranteeing the capacity of the electrochemical apparatus. Since the adhesion force of the second positive electrode active material layer relative to the first positive electrode active material layer is insufficient, in these embodiments of this application, due to the arrangement that along the width direction of the unfolded positive electrode plate, the first end face extends beyond the second end face and the fourth end face does not extend beyond the third end face, the possibility of contact between the second positive electrode active material layer and the positive electrode current collector is reduced, thereby reducing the risk of peeling of the edge portion of the positive electrode active material layer. In addition, in these embodiments of this application, by controlling the types of the first positive electrode active material and the second positive electrode active material and controlling the first end face to extend beyond the second end face and the fourth end face not to extend beyond the third end face, the electrochemical apparatus guarantees its own capacity while reducing the risk of peeling of the positive electrode active material layer. Moreover, the production cost of the electrochemical apparatus is reduced.

### BRIEF DESCRIPTION OF DRAWINGS

The drawings described herein are used to provide a further understanding of this application and constitute a part of this application. The illustrative embodiments of this application and descriptions thereof are used to explain this application and do not constitute an improper limitation to this application.
FIG. 1 is a schematic structural cross-sectional view of an unfolded positive electrode plate along its thickness direction according to an embodiment of this application;
FIG. 2 is a schematic top view of the positive electrode plate in FIG. 1;
FIG. 3 is a schematic structural cross-sectional view of an unfolded positive electrode plate along its thickness direction according to another embodiment of this application;
FIG. 4 is a schematic top view of the positive electrode plate in FIG. 3;
FIG. 5 is a schematic structural cross-sectional view of a positive electrode active material layer and a negative electrode active material layer along their thickness directions according to an embodiment of this application;
FIG. 6 is a schematic structural cross-sectional view of a positive electrode active material layer and a negative electrode active material layer along their thickness directions according to another embodiment of this application; and
FIG. 7 is a schematic top view of an unfolded positive electrode plate of still another embodiment of this application.

### DETAILED DESCRIPTION

In order to make the purpose, technical solutions and advantages of this application clearer, the following further describes this application in detail with reference to the drawings and some embodiments. Obviously, the described embodiments are only some embodiments rather than all embodiments of this application. All other embodiments obtained by a person of ordinary skill in the art based on this application shall fall within the protection scope of this application.

It should be noted that, in specific embodiments of this application, an example in which a lithium-ion battery serves as an electrochemical apparatus is used to explain this application, but the electrochemical apparatus of this application is not limited to lithium-ion batteries.

A first aspect of this application provides an electrochemical apparatus. The electrochemical apparatus includes a positive electrode plate. The positive electrode plate includes a positive electrode current collector and a positive electrode active material layer disposed on at least one surface of the positive electrode current collector. The positive electrode active material layer includes a first positive electrode active material layer and a second positive electrode active material layer. The first positive electrode active material layer is disposed on a surface of the positive electrode current collector, and the second positive electrode active material layer is disposed on a surface of the first positive electrode active material layer away from the positive electrode current collector. The first positive electrode active material layer includes a first positive electrode active material, and the first positive electrode active material includes at least one of lithium cobalt oxide, lithium nickel cobalt manganese oxide, lithium nickel cobalt aluminum oxide, or lithium manganese oxide, and the second positive electrode active material layer includes a second positive electrode active material, the second positive electrode active material includes at least one of lithium iron manganese phosphate or lithium iron phosphate; along a width direction of the unfolded positive electrode plate, the first positive electrode active material layer includes a first end face and a third end face opposite to the first end face, and the second positive electrode active material layer includes a second end face and a fourth end face opposite to the second end face. The first end face and the second end face are located on a first side of the positive electrode plate, the third end face and the fourth end face are located on a second side of the positive electrode plate, and the first side opposite to the second side. A person skilled in the art should understand that, along the width direction of the unfolded positive electrode plate, the first end face and the second end face are located on one side of the positive electrode plate, and the third end face and the fourth end face are located on another side of the positive electrode plate. The first end face of the positive electrode plate extends beyond the second end face, and the fourth end face does not extend beyond the third end face. The above "does not extend beyond" may be understood as that, along the width direction of the unfolded positive electrode plate, the fourth end face is flush with the third end face or the third end face extends beyond the fourth end face. For example, in some embodiments, along the width direction of the unfolded positive electrode plate, the fourth end face is flush with the third end face. In this application, the above "flush with" should be understood as approximately flush with, and a person skilled in the art should understand that the fourth end face and the third end face are flush with each other in an ideal state, but in actual production and application processes, due to different factors such as production processes and manual operations, in some cases, they are not strictly flush with each other, but are approximately flush with each other. In some other embodiments, along the width direction of the unfolded positive electrode plate, the third end face extends beyond the fourth end face.

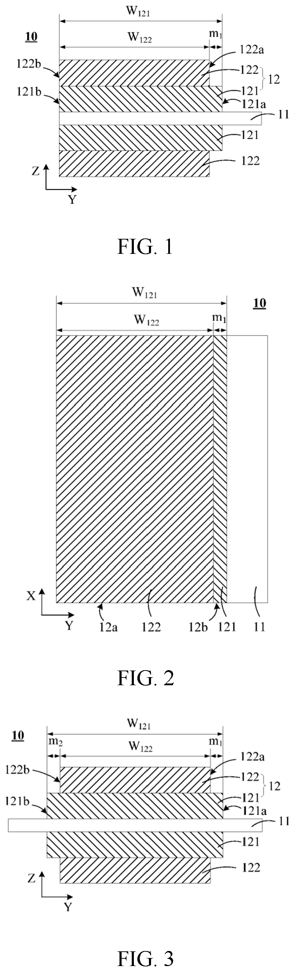

As shown in FIGs. 1 to 4, for ease of understanding, when the positive electrode plate 10 is unfolded, a three-dimensional rectangular coordinate system is established with a length direction of the positive electrode plate 10 as a direction X, a width direction of the positive electrode plate 10 as a direction Y, and a thickness direction of the positive electrode plate 10 as a direction Z. It can be understood that, when the positive electrode plate 10 is unfolded, a length direction, a width direction, and a thickness direction of each of the positive electrode current collector 11, the positive electrode active material layer 12, the first positive electrode active material layer 121, and the second positive electrode active material layer 122 are the same as those of the positive electrode plate 10. The above "the positive electrode plate includes a positive electrode current collector and a positive electrode active material layer disposed on at least one surface of the positive electrode current collector" means that in some embodiments, as shown in FIGs. 1 and 3, the positive electrode plate 10 includes the positive electrode current collector 11 and the positive electrode active material layers 12 disposed on two surfaces of the positive electrode current collector 11. In some other embodiments, the positive electrode plate 10 further includes the positive electrode current collector 11 and the positive electrode active material layer 12 disposed on one surface of the positive electrode current collector 11. The above "surface" may be a partial region of the surface of the positive electrode current collector 11 or an entire region of the surface of the positive electrode current collector 11.

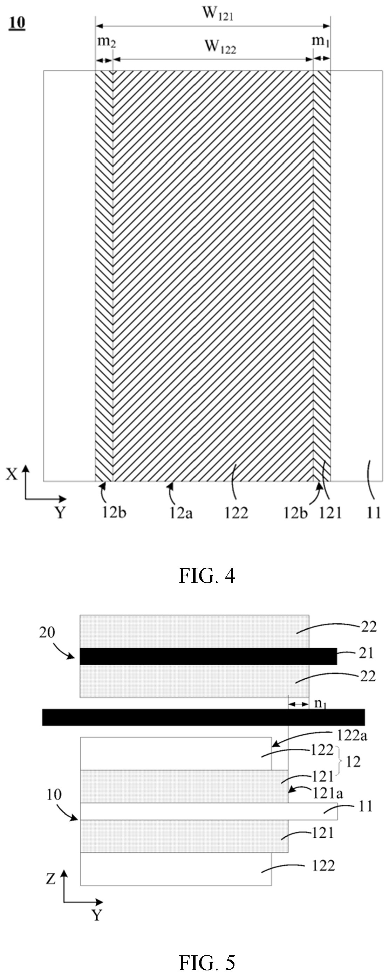

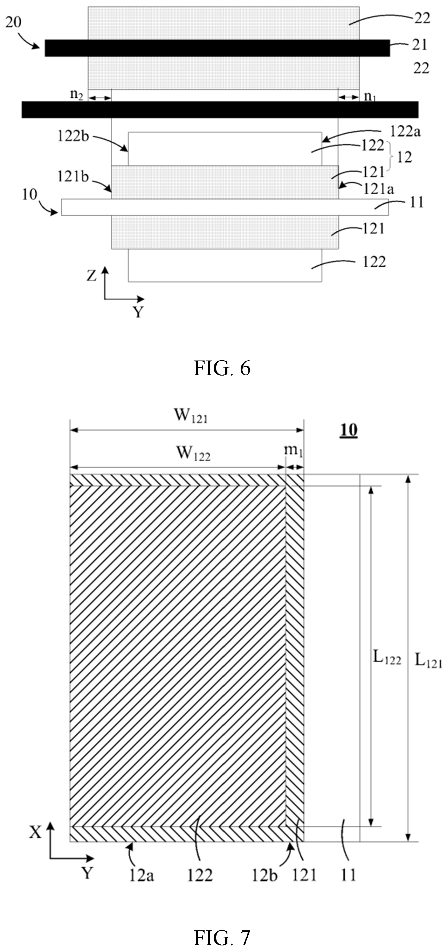

As shown in FIGs. 1 and 3, the positive electrode active material layer 12 includes a first positive electrode active material layer 121 and a second positive electrode active material layer 122, where the first positive electrode active material layer 121 is disposed on a surface of the positive electrode current collector 11, and the second positive electrode active material layer 122 is disposed on a surface of the first positive electrode active material layer 121 away from the positive electrode current collector 11. The first positive electrode active material layer 121 includes a first positive electrode active material, and the first positive electrode active material includes at least one of lithium cobalt oxide, lithium nickel cobalt manganese oxide, lithium nickel cobalt aluminum oxide, or lithium manganese oxide. The second positive electrode active material layer 122 includes a second positive electrode active material, and the second positive electrode active material includes at least one of lithium iron manganese phosphate or lithium iron phosphate. Along the width direction Y of the unfolded positive electrode plate 10, the first positive electrode active material layer 121 includes a first end face 121a and a third end face 121b opposite to the first end face 121a, the second positive electrode active material layer 122 includes a second end face 122a and a fourth end face 122b opposite to the second end face 122a, the first end face 121a and the second end face 122a are located on a first side of the positive electrode plate 10, the third end face 121b and the fourth end face 122b are respectively located on a second side of the positive electrode plate 10, and the first side opposite to the second side. For example, in some embodiments, as shown in FIG. 1, the first end face 121a extends beyond the second end face 122a, and the fourth end face 122b is flush with the third end face 121b. In some other embodiments, as shown in FIG. 3, the first end face 121a extends beyond the second end face 122a, and the third end face 121b extends beyond the fourth end face 122b. In still some other embodiments, in FIG. 1, FIG. 2 and FIG. 7, along the direction Y, another side of the positive electrode current collector 11 may alternatively extend beyond the third end face 121b. Alternatively, in FIG. 2 and FIG. 7, along the direction X, at least one end face of the positive electrode current collector 11 may alternatively extend beyond an end face of the first positive electrode active material layer 121. In yet some other embodiments, in FIG. 4, along the direction X, at least one end face of the positive electrode current collector 11 may alternatively extend beyond an end face of the first positive electrode active material layer 121.

The above type of first positive electrode active material has good adhesivity and high gram capacity, and the above type of first positive electrode active material is applied to the first positive electrode active material layer, so that sufficient adhesion force may be provided between the first positive electrode active material layer and the positive electrode current collector, reducing the risk of peeling of the positive electrode active material layer and providing higher gram capacity for the electrochemical apparatus, thereby enabling the electrochemical apparatus to have higher capacity. The above type of second positive electrode active material has the characteristics of high gram capacity and low cost, and the above type of second positive electrode active material is applied to the second positive electrode active material layer, which may reduce the production cost of the electrochemical apparatus while guaranteeing the capacity of the electrochemical apparatus. Since an adhesion force of the second positive electrode active material layer relative to the first positive electrode active material layer is insufficient, in this application, due to the arrangement that along the width direction of the unfolded positive electrode plate, the first end face extends beyond the second end face and the fourth end face does not extend beyond the third end face, the possibility of contact between the second positive electrode active material layer and the positive electrode current collector is reduced, thereby reducing the risk of peeling of an edge portion of the positive electrode active material layer. Accordingly, in this application, by controlling the types of the first positive electrode active material and the second positive electrode active material and controlling the first end face to extend beyond the second end face and the fourth end face not to extend beyond the third end face, the electrochemical apparatus guarantees its own capacity while reducing the risk of peeling of the positive electrode active material layer. Moreover, the production cost of the electrochemical apparatus is reduced.

In an embodiment of this application, along the thickness direction Z of the unfolded positive electrode plate, a projection of the second positive electrode active material layer on the positive electrode current collector is located within a projection of the first positive electrode active material layer on the positive electrode current collector. As shown in FIG. 2 and FIG. 4, the projection of the second positive electrode active material layer 122 on the positive electrode current collector 11 is located within the projection of the first positive electrode active material layer 121 on the positive electrode current collector 11. It can also be understood that along the thickness direction of the positive electrode plate, a projection area of the second positive electrode active material layer 122 on the positive electrode current collector 11 is less than a projection area of the first positive electrode active material layer 121 on the positive electrode current collector 11. Through the above arrangement, the first positive electrode active material layer is in contact with the positive electrode current collector, which reduces the possibility of contact between the second positive electrode active material layer and the positive electrode current collector, thereby reducing the risk of peeling of an edge portion of the positive electrode active material layer.

In an embodiment of this application, as shown in FIG. 2 and FIG. 4, along the width direction Y of the unfolded positive electrode plate 10, the positive electrode active material layer 12 includes a main body portion 12a and an edge portion 12b, the edge portion 12b is a portion of the first positive electrode active material layer 121 extending beyond the second positive electrode active material layer 122, and the above main body portion 12a refers to other portions of the positive electrode active material layer 12 than the edge portion 12b. Based on a total mass of the first positive electrode active material and the second positive electrode active material in the main body portion, a mass percentage of the second positive electrode active material is 5% to 95%. For example, the mass percentage of the second positive electrode active material is 5%, 10%, 15%, 20%, 25%, 30%, 35%, 40%, 45%, 50%, 55%, 60%, 65%, 70%, 75%, 80%, 85%, 90%, 95%, or any value within a range defined by any two of these values. Controlling the mass percentage of the second positive electrode active material within the above ranges enables the electrochemical apparatus to have lower production cost while reducing the risk of peeling of the positive electrode active material layer and guaranteeing its own capacity.

This application imposes no particular limitation on a mass percentage of the first positive electrode active material, as long as the purposes of this application may be achieved. For example, based on the total mass of the first positive electrode active material and the second positive electrode active material in the main body portion, the mass percentage of the first positive electrode active material is 5% to 95%.

In an embodiment of this application, based on the total mass of the first positive electrode active material and the second positive electrode active material in the main body portion, the mass percentage of the second positive electrode active material is 5% to 60%. Controlling the mass percentage of the second positive electrode active material within the above range may enable the electrochemical apparatus to further increase its own capacity while reducing the risk of peeling of the positive electrode active material layer and the production cost.

In an embodiment of this application, as shown in FIG. 1, a distance by which the first end face 121a extends beyond the second end face 122a is m₁, and 0.2 mm ≤ m₁ ≤ 2 mm. For example, m₁ is 0.2 mm, 0.4 mm, 0.6 mm, 0.8 mm, 1.0 mm, 1.2 mm, 1.4 mm, 1.6 mm, 1.8 mm, 2 mm, or any value within a range defined by any two of these values. Controlling the distance by which the first end face extends beyond the second end face within the above range reduces the possibility of contact between the second positive electrode active material layer and the positive electrode current collector, thereby reducing the risk of peeling of an edge portion of the positive electrode active material layer. In addition, the first positive electrode active material layer and the second positive electrode active material layer are both applied to a region of the positive electrode current collector coated with the positive electrode active material layer as far as possible, so as to provide a maximum capacity and reduce the production cost. Therefore, the electrochemical apparatus guarantees its own capacity while reducing the risk of peeling of the positive electrode active material layer. Moreover, the production cost of the electrochemical apparatus is reduced.

In an embodiment of this application, as shown in FIG. 3, a distance by which the third end face 121b extends beyond the fourth end face 122b is m₂, and 0.2 mm ≤ m₂ ≤ 2 mm. For example, m₂ is 0.2 mm, 0.4 mm, 0.6 mm, 0.8 mm, 1.0 mm, 1.2 mm, 1.4 mm, 1.6 mm, 1.8 mm, 2 mm, or any value within a range defined by any two of these values. Controlling the distance by which the third end face extends beyond the fourth end face within the above range reduces the possibility of contact between the second positive electrode active material layer and the positive electrode current collector, thereby reducing the risk of peeling of an edge portion of the positive electrode active material layer. In addition, the first positive electrode active material layer and the second positive electrode active material layer are both applied to a region of the positive electrode current collector coated with the positive electrode active material layer as far as possible, so as to provide a maximum capacity and reduce the production cost. Therefore, the electrochemical apparatus guarantees its own capacity while reducing the risk of peeling of the positive electrode active material layer.

In an embodiment of this application, m₂ is the same as m₁. In another embodiment of this application, m₂ is different from m₁.

In an embodiment of this application, the electrochemical apparatus further includes a negative electrode plate, and the negative electrode plate includes a negative electrode current collector and a negative electrode active material layer disposed on at least one surface of the negative electrode current collector. For example, in some embodiments, as shown in FIG. 5, the negative electrode plate 20 includes the negative electrode current collector 21 and the negative electrode active material layer 22 disposed on two surfaces of the negative electrode current collector 21. A person skilled in the art can understand that, in some other embodiments, the negative electrode active material layer 22 may alternatively be disposed on one surface of the negative electrode current collector 21. The above "surface" may be a partial region of the surface of the negative electrode current collector 21 or an entire region of the surface of the negative electrode current collector 21, which is not particularly limited in this application, as long as the purposes of this application can be achieved.

In an embodiment of this application, as shown in FIG. 5, along the width direction Y of the unfolded positive electrode plate 10, a distance by which one end of the negative electrode active material layer 22 extends beyond a corresponding end of the positive electrode active material layer 12 is n₁, satisfying: 1 mm ≤ n₁ ≤ 10 mm. For example, n₁ is 1 mm, 2 mm, 3 mm, 4 mm, 5 mm, 6 mm, 7 mm, 8 mm, 9 mm, 10 mm, or any value within a range defined by any two of these values. Controlling the distance by which one end of the negative electrode active material layer extends beyond the corresponding end of the positive electrode active material layer within the above range enables the negative electrode active material layer to provide more positions for intercalating lithium deintercalated from the positive electrode active material layer, reducing the possibility of lithium precipitation on a surface of the negative electrode plate and reducing the risk of cost increase caused by excessive negative electrode active material layer, thereby reducing the production cost of the electrochemical apparatus. This helps to reduce lithium precipitation and production cost of the electrochemical apparatus while guaranteeing the capacity of the electrochemical apparatus and reducing the risk of peeling of the positive electrode active material layer.

In an embodiment of this application, as shown in FIG. 6, along the width direction Y of the unfolded positive electrode plate 10, a distance by which another end of the negative electrode active material layer 22 extends beyond a corresponding end of the positive electrode active material layer 12 is n₂, and 1 mm ≤ n₂ ≤ 10 mm. For example, n₂ is 1 mm, 2 mm, 3 mm, 4 mm, 5 mm, 6 mm, 7 mm, 8 mm, 9 mm, 10 mm, or any value within a range defined by any two of these values. Controlling the distance by which the another end of the negative electrode active material layer extends beyond the corresponding end of the positive electrode active material layer within the above range enables the negative electrode active material layer to provide more positions for intercalating lithium deintercalated from the positive electrode active material layer, reducing the possibility of lithium precipitation on a surface of the negative electrode plate and reducing the risk of cost increase caused by excessive negative electrode active material layer, thereby reducing the production cost of the electrochemical apparatus. This helps to reduce lithium precipitation and production cost of the electrochemical apparatus while guaranteeing the capacity of the electrochemical apparatus and reducing the risk of peeling of the positive electrode active material layer.

It can be understood that, a length direction, a width direction and a thickness direction of each of the negative electrode plate, the negative electrode current collector, and the negative electrode active material layer are the same as those of the positive electrode plate.

In an embodiment of this application, the first positive electrode active material layer further includes a first conductive agent and a first binder, and based on a mass of the first positive electrode active material layer, a mass percentage of the first positive electrode active material is 95% to 98%, a mass percentage of the first conductive agent is 0.5% to 3%, and a mass percentage of the first binder is 0.5% to 3%. For example, based on the mass of the first positive electrode active material layer, the mass percentage of the first positive electrode active material is 95%, 95.5%, 96%, 96.5%, 97%, 97.5%, 98%, or any value within a range defined by any two of these values. For example, based on the mass of the first positive electrode active material layer, the mass percentage of the first conductive agent is 0.5%, 1%, 1.5%, 2%, 2.5%, 3%, or any value within a range defined by any two of these values. For example, based on the mass of the first positive electrode active material layer, the mass percentage of the first binder is 0.5%, 1%, 1.5%, 2%, 2.5%, 3%, or any value within a range defined by any two of these values. Controlling percentages of the first positive electrode active material, the first conductive agent, and the first binder in the first positive electrode active material layer within the above ranges may provide high gram capacity while enabling high adhesion force between the first positive electrode active material layer and the positive electrode current collector, thereby enabling the electrochemical apparatus to guarantee its own capacity while reducing the risk of peeling of the positive electrode active material layer.

In an embodiment of this application, the second positive electrode active material layer further includes a second conductive agent and a second binder, and based on a mass of the second positive electrode active material layer, a mass percentage of the second positive electrode active material is 95% to 98%, a mass percentage of the second conductive agent is 0.6% to 3%, and a mass percentage of the second binder is 0.5% to 2%. For example, based on the mass of the second positive electrode active material layer, the mass percentage of the second positive electrode active material is 95%, 95.5%, 96%, 96.5%, 97%, 97.5%, 98%, or any value within a range defined by any two of these values. For example, based on the mass of the second positive electrode active material layer, the mass percentage of the second conductive agent is 0.6%, 1%, 1.5%, 2%, 2.5%, 3%, or any value within a range defined by any two of these values. For example, based on the mass of the second positive electrode active material layer, the mass percentage of the second binder is 0.5%, 1%, 1.5%, 2%, or any value within a range defined by any two of these values. Controlling percentages of the second positive electrode active material, the second conductive agent, and the second binder in the second positive electrode active material layer within the above ranges may provide high gram capacity and low production cost while enabling high adhesion force between the second positive electrode active material layer and the first positive electrode active material layer, thereby enabling the electrochemical apparatus to guarantee its own capacity while reducing the risk of peeling of the positive electrode active material layer.

This application imposes no particular limitation on the types of the first conductive agent, the first binder, the second conductive agent, and the second binder, as long as the purposes of this application can be achieved. For example, the first conductive agent and the second conductive agent are each independently selected from at least one of conductive carbon black, conductive carbon nanotubes, carbon fiber, conductive graphite, or graphene. For example, the first binder and the second binder are each independently selected from at least one of polyvinylidene fluoride, polytetrafluoroethylene, polypropylene, polyacrylic acid, ethyl polyacrylate, polyacrylonitrile, sodium carboxymethyl cellulose, styrene-butadiene rubber, or polyurethane.

In an embodiment of this application, in the main body portion, a coating weight of the positive electrode active material layer is 200 mg/1540.24 mm² to 600 mg/1540.24 mm². For example, the coating weight of the positive electrode active material layer is 200 mg/1540.24 mm², 250 mg/1540.24 mm², 300 mg/1540.24 mm², 350 mg/1540.24 mm², 400 mg/1540.24 mm², 450 mg/1540.24 mm², 500 mg/1540.24 mm², 550 mg/1540.24 mm², 600 mg/1540.24 mm², or any value within a range defined by any two of these values. Controlling the coating weight of the positive electrode active material layer within the above range enables high percentages of the first positive electrode active material and the second positive electrode active material in the positive electrode active material layer, so that the positive electrode active material layer has a large amount of positive electrode active material, thereby providing higher capacity for the electrochemical apparatus.

In an embodiment of this application, a gram capacity of the first positive electrode active material is a, and a gram capacity of the second positive electrode active material is b, satisfying: 10% ≤ (a-b)/b × 100% ≤ 75%, and 160 mAh/g ≤ a ≤ 210 mAh/g. For example, a value of (a-b)/b × 100% is 10%, 14%, 20%, 30%, 40%, 50%, 60%, 70%, 75%, or any value within a range defined by any two of these values. For example, a is 160 mAh/g, 170 mAh/g, 180 mAh/g, 190 mAh/g, 200 mAh/g, 210 mAh/g, or any value within a range defined by any two of these values. Controlling the value of (a-b)/b × 100% and the gram capacity a of the first positive electrode active material within the above ranges enables the first positive electrode active material and the second positive electrode active material to act synergistically, so as to reduce the production cost of the positive electrode active material layer while the positive electrode active material layer has high capacity. This helps to reduce the production cost of the electrochemical apparatus while guaranteeing the capacity of the electrochemical apparatus and reducing the risk of peeling of the positive electrode active material layer.

In an embodiment of this application, 14% ≤ (a-b)/b × 100% ≤ 30%. Controlling the value of (a-b)/b × 100% within the above range helps to further reduce the production cost of the electrochemical apparatus while guaranteeing the capacity of the electrochemical apparatus and reducing the risk of peeling of the positive electrode active material layer.

In an embodiment of this application, 120 mAh/g ≤ b ≤ 140 mAh/g. For example, b is 120 mAh/g, 125 mAh/g, 130 mAh/g, 135 mAh/g, 140 mAh/g, or any value within a range defined by any two of these values. Controlling the gram capacity b of the second positive electrode active material within the above range helps to further increase the capacity of the electrochemical apparatus.

This application imposes no particular limitation on a way of controlling gram capacities of the first positive electrode active material and the second positive electrode active material, as long as the purposes of this application can be achieved. For example, it can be achieved by controlling the types of the first positive electrode active material and the second positive electrode active material.

In an embodiment of this application, a coating weight of the negative electrode active material layer is 100 mg/1540.24 mm² to 300 mg/1540.24 mm². For example, the coating weight of the negative electrode active material layer is 100 mg/1540.24 mm², 140 mg/1540.24 mm², 180 mg/1540.24 mm², 220 mg/1540.24 mm², 260 mg/1540.24 mm², 300 mg/1540.24 mm², or any value within a range defined by any two of these values. Controlling the coating weight of the negative electrode active material layer within the above range enables higher percentage of negative electrode active material in the negative electrode active material layer, which may provide higher capacity for the negative electrode active material layer, thereby enabling the electrochemical apparatus to have higher capacity.

In an embodiment of this application, the negative electrode active material layer includes a negative electrode active material, and a gram capacity of the negative electrode active material is 280 mAh/g to 420 mAh/g. For example, the gram capacity of the negative electrode active material is 280 mAh/g, 300 mAh/g, 320 mAh/g, 340 mAh/g, 360 mAh/g, 380 mAh/g, 400 mAh/g, 420 mAh/g, or any value within a range defined by any two of these values. Controlling the gram capacity of the negative electrode active material within the above range helps to provide higher capacity for the electrochemical apparatus.

This application imposes no particular limitation on a way of controlling the gram capacity of the negative electrode active material, as long as the purposes of this application can be achieved. For example, it can be achieved by controlling the type of the negative electrode active material.

In an embodiment of this application, a CB value of the electrochemical apparatus satisfies: 1.04 ≤ CB ≤ 1.2. For example, CB is 1.04, 1.08, 1.12, 1.16, 1.2, or any value within a range defined by any two of these values. In this application, CB = (gram capacity of negative electrode active material × mass of negative electrode active material on per unit area of negative electrode plate)/(gram capacity of first positive electrode active material mass of first positive electrode active material on per unit area of positive electrode plate + gram capacity of second positive electrode active material × mass of second positive electrode active material on per unit area of positive electrode plate). The above unit area refers to 1 mm². Controlling the CB value within the above range enables, under current actual production capacity, all lithium deintercalated from the positive electrode plate of the electrochemical apparatus to be intercalated into the negative electrode plate, helping to reduce the occurrence of lithium precipitation in the electrochemical apparatus, improving the cycling performance of the electrochemical apparatus, and guaranteeing the minimum usage of the negative electrode active material in the negative electrode plate, thereby reducing the production cost of the electrochemical apparatus.

In an embodiment of this application, a CB value of the edge portion is greater than or equal to a CB value of the main body portion. In this application, the CB value of the edge portion is 1.08 to 1.3, and the CB value of the main body portion is 1.05 to 1.1. The CB value of the edge portion being greater than or equal to the CB value of the main body portion helps to improve the kinetic performance at an edge position of the electrochemical apparatus, thereby overcoming the problem that the kinetic performance of the edge portion is inferior to that of the main body portion due to loosening of the edge portion.

In an embodiment of this application, as shown in FIG. 7, along the length direction X of the unfolded positive electrode plate 10, a length L₁₂₁ of the first positive electrode active material layer 121 is greater than a length L₁₂₂ of the second positive electrode active material layer 122. Through the above arrangement, the possibility of contact between the second positive electrode active material layer and the positive electrode current collector may be reduced in both the length direction and the width direction of the unfolded positive electrode plate, thereby further reducing the risk of peeling of an edge portion of the positive electrode active material layer.

This application imposes no particular limitation on the type of the positive electrode current collector, as long as the purposes of this application can be achieved. For example, the positive electrode current collector may include aluminum foil, aluminum alloy foil, or the like.

This application imposes no particular limitation on a preparation method of the positive electrode plate, as long as the purposes of this application can be achieved. For example, the preparation method of the positive electrode plate may include but is not limited to the following steps: (1) preparing a first positive electrode slurry and a second positive electrode slurry; (2) applying the first positive electrode slurry on one surface of the positive electrode current collector, followed by drying to obtain a positive electrode plate having one surface coated with the first positive electrode active material layer; and applying the second positive electrode slurry on a surface of the first positive electrode active material layer away from the positive electrode current collector, followed by drying to obtain a positive electrode plate having one surface coated with the first positive electrode active material layer and the second positive electrode active material layer; (3) repeating Step (2), applying the first positive electrode slurry and the second positive electrode slurry on another surface of the positive electrode current collector to obtain a positive electrode plate having two surfaces coated with the first positive electrode active material layer and the second positive electrode active material layer; and (4) performing cold pressing, cutting, and positive electrode tab welding. This application imposes no particular limitation on a preparation method of the first positive electrode slurry and the second positive electrode slurry in the above Step (1), as long as percentages of the first positive electrode active material, the first conductive agent, and the first binder in the first positive electrode active material layer are within the ranges provided in this application, percentages of the second positive electrode active material, the second conductive agent, and the second binder in the second positive electrode active material layer are within the ranges provided in this application, and the purposes of this application can be achieved. This application imposes no particular limitation on a temperature and time of drying in the above Step (2), and a person skilled in the art may select according to actual needs, as long as the purposes of this application can be achieved. This application imposes no particular limitation on process parameters of cold pressing, cutting, and positive electrode tab welding in the above Step (4), and a person skilled in the art may select according to actual needs, as long as the purposes of this application can be achieved.

This application imposes no particular limitation on the negative electrode current collector, as long as the purposes of this application can be achieved. For example, the negative electrode current collector may include copper foil, copper alloy foil, nickel foil, titanium foil, foamed nickel, foamed copper, or the like. This application imposes no particular limitation on the type of the negative electrode active material, as long as the purposes of this application can be achieved. For example, the negative electrode active material may include at least one of natural graphite, artificial graphite, soft carbon, hard carbon, mesocarbon microbeads, tin-based material, silicon-based material, lithium titanate, transition metal nitride, or natural flake graphite. Optionally, the negative electrode active material layer further includes at least one of a negative electrode conductive agent, a thickener, or a negative electrode binder. This application imposes no particular limitation on the types of the negative electrode conductive agent, the thickener, and the negative electrode binder in the negative electrode active material layer, as long as the purposes of this application can be achieved. This application imposes no particular limitation on a mass ratio of the negative electrode active material, the negative electrode conductive agent, the thickener, and the negative electrode binder in the negative electrode active material layer, as long as the purposes of this application can be achieved. For example, the mass ratio of the negative electrode active material, the negative electrode conductive agent, the thickener, and the negative electrode binder in the negative electrode active material layer is (97-98):(0-1.5):(0-1.5):(1.0-1.9).

This application imposes no particular limitation on thicknesses of the negative electrode current collector and the negative electrode active material layer, as long as the purposes of this application can be achieved. For example, the thickness of the negative electrode current collector is 5 µm to 20 µm, and the thickness of the negative electrode active material layer is 30 µm to 120 µm.

The electrochemical apparatus of this application further includes a separator, and the separator is disposed between the positive electrode plate and the negative electrode plate to separate the positive electrode plate and the negative electrode plate. This application imposes no particular limitation on the separator, as long as the purposes of this application can be achieved. For example, a material of the separator may include but is not limited to at least one of polyolefin (PO) mainly including polyethylene (PE) and polypropylene (PP), polyester (such as a polyethylene terephthalate (PET) film), cellulose, polyimide (PI), polyamide (PA), spandex, or aramid. The type of the separator may include at least one of a woven film, a non-woven film, a microporous film, a composite film, a calendered film, or a spun film.

In an embodiment of this application, the electrochemical apparatus further includes a packaging bag and an electrolyte, and the electrolyte, the positive electrode plate, the separator, and the negative electrode plate are accommodated in the packaging bag. This application imposes no particular limitation on the packaging bag and the electrolyte, and a person skilled in the art may select packaging bags and electrolytes well-known in the art according to needs, as long as the purposes of this application can be achieved.

This application imposes no particular limitation on the type of the electrochemical apparatus, which may include any apparatus in which electrochemical reactions take place. For example, the electrochemical apparatus may include but is not limited to: a lithium metal secondary battery, a lithium-ion secondary battery (lithium-ion battery), a sodium-ion secondary battery (sodium-ion battery), a lithium polymer secondary battery, and a lithium-ion polymer secondary battery.

This application imposes no particular limitation on a preparation method of the electrochemical apparatus, and a preparation method well-known in the art may be used, as long as the purposes of this application can be achieved. For example, the preparation method of the electrochemical apparatus includes but is not limited to the following steps: stacking a positive electrode plate, a separator, and a negative electrode plate in sequence, followed by operations such as winding and folding as needed to obtain an electrode assembly of a wound structure; placing the electrode assembly in a packaging bag; injecting an electrolyte into the packaging bag; and sealing the packaging bag to obtain an electrochemical apparatus; or, stacking a positive electrode plate, a separator, and a negative electrode plate in sequence; then fixing four corners of the entire stacked structure to obtain an electrode assembly of a stacked structure; placing the electrode assembly in a packaging bag; injecting an electrolyte into the packaging bag; and sealing the packaging bag to obtain an electrochemical apparatus.

A second aspect of this application provides an electronic apparatus, including the electrochemical apparatus described in any one of the above embodiments.

The electronic apparatus of this application is not particularly limited, and it may be an electronic apparatus known in the prior art. For example, the electronic apparatus may include but is not limited to: a notebook computer, a pen input type computer, a mobile computer, an e-book player, a portable telephone, a portable fax machine, a portable copier, a portable printer, a head-mounted stereo earphone, a video recorder, a liquid crystal television, a portable cleaner, a portable CD player, a mini disc, a transceiver, an electronic notebook, a calculator, a memory card, a portable recorder, a radio, a backup power supply, a motor, an automobile, a motorcycle, an electric bicycle, a bicycle, a lighting fixture, a toy, a game console, a clock, an electric tool, a flash lamp, a camera, a large household storage battery, and a lithium-ion capacitor.

### Examples

Hereinafter, examples and comparative examples are given to illustrate the implementation of this application more specifically. Various tests and evaluations were performed according to the following methods.

### Test methods and devices:

### Test of gram capacity:

### (1) Test of gram capacity b of second positive electrode active material:

First, a positive electrode plate was disassembled from a fully discharged lithium-ion battery, and an electrolyte in the positive electrode plate was removed by drying in an electric oven at a temperature of 60°C; then, second positive electrode active material powder was scraped from the positive electrode plate with a knife, a balance was used to weigh a weight m₁ of 100 mg, and the powder was immersed in a hydrochloric-acid solution (with a mass fraction of 10%) for 3 h; then, remaining solid substances were filtered out, the solid substances were baked in an electric oven at a temperature of 60°C for 24 h, and then a solid weight m₂ was weighed; and (m₁-m₂)/m₁ was calculated as a mass proportion x of the second positive electrode active material in an original positive electrode plate composition. Second positive electrode active material powder was scraped from the positive electrode plate with a knife again, the balance was used to weigh a weight m₃ of 100 mg, the powder was mixed with conductive carbon black (Super P) and polyvinylidene fluoride (PVDF) at a mass ratio of 95:2.5:2.5, and N-methylpyrrolidone (NMP) was added as a solvent to prepare a slurry with a solid content of 65wt%; and the slurry was stirred uniformly. The slurry was uniformly applied on a positive electrode current collector aluminum foil, and after the positive electrode plate was dried, the positive electrode plate was assembled with a lithium metal sheet, a separator, and an electrolyte to form a button cell. Ultimately, constant-current charging was performed at a rate of 0.1C to 4.3 V, constant-voltage charging was performed at 4.3 V to 0.02C, and then constant-current discharging was performed at a rate of 0.1C to 2.8 V, to obtain an effective capacity of the button cell, and the effective capacity was divided by an effective active material powder weight m₄ (m₄=m₃ × x) to obtain the gram capacity of the second positive electrode active material. The electrolyte was the same as that in Example 1-1.

### (2) Test of gram capacity a of first positive electrode active material:

First, a positive electrode plate was disassembled from a fully discharged lithium-ion battery, and an electrolyte in the positive electrode plate was removed by drying in an electric oven at a temperature of 60°C; after the second positive electrode active material layer was scraped off from the positive electrode plate with a knife, first positive electrode active material powder was scraped with a knife, a balance was used to weigh a weight m₁ of 100 mg, and the powder was immersed in a hydrochloric-acid solution (with a mass fraction of 10%) for 3 h; then, remaining solid substances were filtered out, and the solid substances were baked in an electric oven at a temperature of 60°C for 24 h, and then a solid weight m₂ was weighed; and (m₁-m₂)/m₁ was calculated as a mass proportion x of the first positive electrode active material in an original electrode plate composition. First positive electrode active material powder was scraped from the positive electrode plate with a knife again, the balance was used to weigh a weight m₃ of 100 mg, the powder was mixed with conductive carbon black (Super P) and polyvinylidene fluoride (PVDF) at a mass ratio of 95:2.5:2.5, and N-methylpyrrolidone (NMP) was added as a solvent to prepare a slurry with a solid content of 65wt%; and the slurry was stirred uniformly. The slurry was uniformly applied on a positive electrode current collector aluminum foil, and after the electrode plate was dried, the electrode plate was assembled with a lithium metal sheet, a separator, and an electrolyte to form a button cell. Ultimately, constant-current charging was performed at a rate of 0.1C to 4.3 V, constant-voltage charging was performed at 4.3 V to 0.02C, and then constant-current discharging was performed at a rate of 0.1C to 2.8 V, to obtain an effective capacity of the button cell, and the effective capacity was divided by an effective active material powder weight m₄ (m₄=m₃ × x) to obtain the gram capacity of the first positive electrode active material. The electrolyte was the same as that in Example 1-1.

### (3) Test of gram capacity c of negative electrode active material

First, a negative electrode plate was disassembled from a fully discharged lithium-ion battery, immersed in deionized water for 3 h, and then dried in an electric oven at a temperature of 60°C; then, negative electrode active material powder was scraped from the negative electrode plate with a knife; a balance was used to weigh a weight m₁ of 100 mg; the powder was heated to 700°C using a thermogravimetric analyzer (inert gas mode), and then a remaining powder weight m₂ was recorded; and a value of (m₁-m₂)/m₁ was calculated as a mass proportion y of the negative electrode active material in the negative electrode plate. Negative electrode active material powder was scraped from the negative electrode plate with a knife again, the balance was used to weigh a weight m₃ of 100 mg, the powder was mixed with conductive carbon black (Super P) and polyvinylidene fluoride (PVDF) at a mass ratio of 95:2.5:2.5, N-methylpyrrolidone (NMP) was added as a solvent to prepare a slurry with a solid content of 65wt%, and the slurry was stirred uniformly. The slurry was uniformly applied on a negative electrode current collector copper foil, and after the negative electrode plate was dried, the negative electrode plate was assembled with a lithium metal sheet, a separator, and an electrolyte to form a button cell. Ultimately, constant-current charging was performed at a rate of 0.1C to 1.5 V, constant-voltage charging was performed at 1.5 V to 0.02C, and then constant-current discharging was performed at a rate of 0.1C to 0 V, to obtain an effective capacity of the button cell, and the effective capacity was divided by an effective active material powder weight m₄ (m₄=m₃ × y) to obtain the gram capacity of the negative electrode active material. The electrolyte was the same as that in Example 1-1.

### Test of coating weight:

### (1) Test of coating weight of positive electrode active material layer:

A fully discharged lithium-ion battery was disassembled to obtain a positive electrode plate; impurities on a surface of the positive electrode plate were cleaned with dimethyl carbonate (DMC); then the positive electrode plate was dried; a positive electrode plate sample with an area of 1540.25 mm² was cut from a main body portion of the positive electrode active material layer, placed on a balance, and weighed, with a weight recorded as p₁; then the positive electrode active material layer on the positive electrode plate was cleaned; and the positive electrode current collector was weighed on a balance, with a weight recorded as p₂.

If it was a positive electrode plate with one surface coated with the positive electrode active material layer, the coating weight CW₁ was equal to p₁-p₂.

If it was a positive electrode plate having two surfaces coated with the positive electrode active material layer, the coating weight CW₁ was equal to (p₁-p₂)/2.

The coating weight of the first positive electrode active material layer was equal to CW₁ × N₁, and a coating weight of the second positive electrode active material layer was equal to CW₁ × N₂.

### (2) Test of coating weight of negative electrode active material layer:

A fully discharged lithium-ion battery was disassembled to obtain a negative electrode plate; impurities on a surface of the negative electrode plate were cleaned with dimethyl carbonate; then the negative electrode plate was dried; a negative electrode plate sample with an area of 1540.25 mm² was cut, placed on a balance, and weighed, with a weight recorded as q₁; then the negative electrode active material layer on the negative electrode plate was cleaned; and the negative electrode current collector was placed on a balance and weighed, weight a weight recorded as q₂.

If it was a negative electrode plate having one surface coated with the negative electrode active material layer, the coating weight was equal to q₁-q₂.

If it was a negative electrode plate having two surfaces coated with the negative electrode active material layer, the coating weight was equal to (q₁-q₂)/2.

### Test of adhesion force:

After the lithium-ion battery of each example or comparative example was fully discharged, the battery was disassembled to obtain a positive electrode plate, the positive electrode plate was cleaned with dimethyl carbonate and then cut into a sample of 4 cm × 0.5 cm, a rectangular adhesive tape with a length × width=2 cm × 0.2 cm was pasted on the positive electrode active material layer, one end of the adhesive tape was connected to a force gauge, the force gauge was pulled until the adhesive is removed from the positive electrode active material layer by tearing, and a reading of the force gauge was read, where the reading of the force gauge was divided by a width of the adhesive tape (0.2 cm) to obtain the adhesion force. Specific tests were as follows.

### (1) Test of main body adhesion force:

A 0.2 cm wide rectangular adhesive tape was pasted on a central region of a 4 cm × 0.5 cm sample.

### (2) Test of edge adhesion force:

A 0.2 cm wide rectangular adhesive tape was pasted on a position close to an edge side of a 4 cm × 0.5 cm sample in an edge-aligned manner.

### Test of capacity:

Lithium-ion batteries in the examples and comparative examples were subjected to constant-current charging at 0.5C to 4.3 V, subjected to constant-voltage charging at 4.3 V to a current of 0.02C, and discharged at a rate of 0.2C to 2.8 V, and corresponding capacities were collected, which were the capacities of the lithium-ion batteries in the examples and comparative examples.

### Example 1-1

### <Preparation of positive electrode plate>

A first positive electrode active material lithium nickel cobalt manganese oxide (NCM60-10-30, LiNi_{0.6}Co_{0.1}Mn_{0.3}O₂), a first conductive agent conductive carbon black (Super P) and conductive carbon nanotubes (CNT), and a first binder polyvinylidene fluoride (PVDF, with a weight average molecular weight of 8000-10000) were mixed at a mass ratio of 97.1:1.0:0.4:1.5, N-methylpyrrolidone (NMP) was added as a solvent, and the mixture was stirred uniformly to prepare a first positive electrode slurry with a solid content of 75wt%. A gram capacity a of the first positive electrode active material was equal to 180 mAh/g.

A second positive electrode active material lithium iron manganese phosphate (LiFe_{0.4}Mn_{0.6}PO₄), a second conductive agent Super P, and a second binder PVDF (with a weight average molecular weight of 8000-10000) were mixed at a mass ratio of 97.5:1.0:1.5, and N-methylpyrrolidone (NMP) was added as a solvent to prepare a second positive electrode slurry with a solid content of 65wt%. A gram capacity b of the second positive electrode active material was equal to 140 mAh/g.

The first positive electrode slurry was applied on one surface of a positive electrode current collector aluminum foil with a thickness of 10 µm, and dried at 90°C to obtain a positive electrode plate having one surface coated with the first positive electrode active material layer; and the second positive electrode slurry was applied on a surface of the first positive electrode active material layer away from the positive electrode current collector, and dried to obtain a positive electrode plate having one surface coated with the first positive electrode active material layer and the second positive electrode active material layer. Then, the above steps were repeated on another surface of the aluminum foil to obtain a positive electrode plate having two surfaces coated with the first positive electrode active material layer and the second positive electrode active material layer (as shown in FIG. 1). Cold pressing was performed, cutting was performed, and an aluminum positive electrode tab was welded, to obtain a positive electrode plate with a specification of 110 mm × 867 mm for later use.

A width W₁₂₁ of the first positive electrode active material layer was equal to 100 mm, and a width W₁₂₂ of the second positive electrode active material layer was equal to 98 mm. A distance m₁ by which the first end face extends beyond the second end face was equal to 2 mm. A length L₁₂₁ of the first positive electrode active material layer was equal to 867 mm, and a length L₁₂₂ of the second positive electrode active material layer was equal to 867 mm. A compacted density of the positive electrode active material layer was 2.6 g/cm³. A coating weight CW₁ of the positive electrode active material layer was equal to 260 mg/1540.24 mm². Based on a total mass of the first positive electrode active material and the second positive electrode active material, a mass percentage N₁ of the first positive electrode active material was equal to 30%, and a mass percentage N₂ of the second positive electrode active material was equal to 70%. Coating weight of first positive electrode active material layer=CW₁ × N₁=260 × 30%=78 mg/1540.24 mm², and coating weight of second positive electrode active material layer=CW₁ × N₂=260 × 70%=182 mg/1540.24 mm².

### <Preparation of negative electrode plate>

A negative electrode active material artificial graphite, a negative electrode conductive agent conductive carbon black, and a negative electrode binder styrene-butadiene rubber (SBR, with a weight average molecular weight of 50 × 10⁵) were mixed at a mass ratio of 97:1.5:1.5, then deionized water was added as a solvent, and the mixture was stirred under the action of a vacuum stirrer to obtain a negative electrode slurry with a solid content of 70wt% and a uniform system. The negative electrode slurry was uniformly applied on one surface of a negative electrode current collector copper foil with a thickness of 8 µm, and dried at 110°C. to obtain a negative electrode plate having one surface coated with a negative electrode active material layer (with a thickness of 130 µm). Then, the above steps were repeated on another surface of the copper foil to obtain a negative electrode plate having two surfaces coated with the negative electrode active material layer. Cold pressing was performed, cutting was performed, and a copper negative electrode tab was welded, to obtain a negative electrode plate with a specification of 115 mm × 880 mm for later use.

A width of the negative electrode active material layer was 105 mm, and a compacted density of the negative electrode active material layer was 1.6 g/cm³. A gram capacity c of the negative electrode active material was equal to 340 mAh/g. A coating weight CW₂ of the negative electrode active material layer was equal to 135 mg/1540.24 mm².

### <Preparation of separator>

A polyethylene film with a thickness of 15 µm was used.

### <Preparation of electrolyte>

In a dry argon atmosphere, ethylene carbonate (EC), ethyl methyl carbonate (EMC), and diethyl carbonate (DEC) were mixed at a mass ratio of 30:50:20 to obtain an organic solvent, then a lithium salt LiPF₆ was added and dissolved in the organic solvent, and the mixture was mixed uniformly to obtain an electrolyte with a lithium salt concentration of 1.5 mol/L.

### <Preparation of lithium-ion battery>

The above prepared negative electrode plate, separator, and positive electrode plate were stacked and wound to obtain an electrode assembly of a wound structure. The electrode assembly was placed in an aluminum-plastic film packaging bag and dried, and then the electrolyte was injected, followed by processes such as vacuum packaging, standing, formation, degassing, and edge cutting, to obtain a lithium-ion battery. Formation step: constant-current charging was performed at 0.02C to 3.3 V, and then constant-current charging was performed at 0.1C to 3.6 V.

### Examples 1-2 to 1-5

Except that relevant preparation parameters were adjusted according to Table 1, the rest was the same as Example 1-1.

When m₁ changed, a width of the second positive electrode active material layer changed accordingly, and a width of the first positive electrode active material layer remained unchanged.

### Example 1-6

### <Preparation of positive electrode plate>

A positive electrode plate having two surfaces coated with the first positive electrode active material layer and the second positive electrode active material layer is shown in FIG. 3.

A width W₁₂₁ of the first positive electrode active material layer was equal to 100 mm, and a width W₁₂₂ of the second positive electrode active material layer was equal to 99.6 mm. A distance m₁ by which the first end face extends beyond the second end face was equal to 0.2 mm, and a distance m₂ by which the third end face extends beyond the fourth end face was equal to 0.2 mm. A length L₁₂₁ of the first positive electrode active material layer was equal to 867 mm, and a length L₁₂₂ of the second positive electrode active material layer was equal to 867 mm.

The rest was the same as Example 1-1.

### Examples 1-7 to 1-10

Except that relevant preparation parameters were adjusted according to Table 1, the rest was the same as Example 1-6.

When m₁ and m₂ changed, the width of the second positive electrode active material layer changed accordingly, and the width of the first positive electrode active material layer remained unchanged.

### Example 1-11

### <Preparation of positive electrode plate>

The second positive electrode active material was adjusted to lithium iron phosphate, and a gram capacity b of the second positive electrode active material was equal to 143 mAh/g.

The rest was the same as Example 1-1.

### Example 1-12

### <Preparation of positive electrode plate>

The first positive electrode active material was adjusted to lithium cobalt oxide, and a gram capacity a of the first positive electrode active material was equal to 200 mAh/g.

The rest was the same as Example 1-1.

### Example 1-13

### <Preparation of positive electrode plate>

The first positive electrode active material was adjusted to lithium nickel cobalt aluminum oxide, and a gram capacity a of the first positive electrode active material was equal to 185 mAh/g.

The rest was the same as Example 1-1.

### Examples 2-1 to 2-8

Except that preparation parameters were adjusted according to Table 1, the rest was the same as Example 1-1.

In Examples 2-5 to 2-8, when a mass percentage of the first conductive agent changed, respective mass percentages of the first conductive agents conductive carbon black (Super P) and conductive carbon nanotubes (CNT) changed according to a mass ratio of 1.0:0.4.

### Examples 3-1 to 3-18

Except that preparation parameters were adjusted according to Table 1, the rest was the same as Example 1-1.

When a coating weight CW₁ of the positive electrode active material layer changed, a coating weight of the first positive electrode active material layer changed according to the formula CW₁ × N₁, and a coating weight of the second positive electrode active material layer changed according to the formula CW₁ × N₂.

### Comparative Example 1 and Comparative Example 2

Except that preparation parameters were adjusted according to Table 1, the rest was the same as Example 1-1.

Preparation parameters and performance parameters of the examples and comparative examples are shown in Tables 1 to 3.

**Table 1**

| | First positive electrode active material | Second positive electrode active material | W₁₂₁ (mm) | W₁₂₂ (mm) | m₁ (mm) | m₂ (mm) | Main body adhesion force (N/m) | Edge adhesion force (N/m) | Capacity (mAh) |
|---|---|---|---|---|---|---|---|---|---|
| Example 1-1 | NCM60-10-30 | LiFe_{0.4}Mn_{0.6}PO₄ | 100 | 98 | 2 | \ | 8 | 8 | 820 |
| Example 1-2 | NCM60-10-30 | LiFe_{0.4}Mn_{0.6}PO₄ | 100 | 99.8 | 0.2 | \ | 8 | 8 | 829 |
| Example 1-3 | NCM60-10-30 | LiFe_{0.4}Mn_{0.6}PO₄ | 100 | 99 | 1 | \ | 8 | 8 | 825 |
| Example 1-4 | NCM60-10-30 | LiFe_{0.4}Mn_{0.6}PO₄ | 100 | 99.9 | 0.1 | \ | 8 | 8 | 829.5 |
| Example 1-5 | NCM60-10-30 | LiFe_{0.4}Mn_{0.6}PO₄ | 100 | 97.5 | 2.5 | \ | 8 | 8 | 817.5 |
| Example 1-6 | NCM60-10-30 | LiFe_{0.4}Mn_{0.6}PO₄ | 100 | 99.6 | 0.2 | 0.2 | 8 | 8 | 828 |
| Example 1-7 | NCM60-10-30 | LiFe_{0.4}Mn_{0.6}PO₄ | 100 | 98 | 1 | 1 | 8 | 8 | 820 |
| Example 1-8 | NCM60-10-30 | LiFe_{0.4}Mn_{0.6}PO₄ | 100 | 96 | 2 | 2 | 8 | 8 | 810 |
| Example 1-9 | NCM60-10-30 | LiFe_{0.4}Mn_{0.6}PO₄ | 100 | 99.8 | 0.1 | 0.1 | 8 | 8 | 829 |
| Example 1-10 | NCM60-10-30 | LiFe_{0.4}Mn_{0.6}PO₄ | 100 | 95 | 2.5 | 2.5 | 8 | 8 | 805 |
| Example 1-11 | NCM60-10-30 | Lithium iron phosphate | 100 | 98 | 2 | \ | 8 | 8 | 820 |
| Example 1-12 | Lithium cobalt oxide | LiFe_{0.4}Mn_{0.6}PO₄ | 100 | 98 | 2 | \ | 8 | 8 | 835 |
| Example 1-13 | Lithium nickel cobalt aluminum oxide | LiFe_{0.4}Mn_{0.6}PO₄ | 100 | 98 | 2 | \ | 8 | 8 | 820 |
| Comparative Example 1 | LiFe_{0.4}Mn_{0.6}PO₄ | NCM60-10-30 | 100 | 98 | 2 | \ | 2 | 2 | 800 |
| Comparative Example 2 | NCM60-10-30 | LiFe_{0.4}Mn_{0.6}PO₄ | 98 | 100 | -2 | \ | 8 | 3 | 790 |

| | | | | | | | | | |
|---|---|---|---|---|---|---|---|---|---|
| Note: "\" in Table 1 indicates that there is no corresponding parameter. | | | | | | | | | |

It can be seen from Examples 1-1 to 1-13, Comparative Example 1 and Comparative Example 2 that in these examples of this application, the first positive electrode active material and the second positive electrode active material are selected within the ranges provided in this application, and the first end face of the first positive electrode active material layer is adjusted to extend beyond the second end face of the second positive electrode active material layer, and the fourth end face of the first positive electrode active material layer does not extend beyond the third end face of the second positive electrode active material layer, so that the positive electrode plates have higher main body adhesion force and edge adhesion force, and the lithium-ion batteries have higher capacity, indicating that the lithium-ion batteries reduce the risk of peeling of the positive electrode active material layer while guaranteeing high capacity. However, in the lithium-ion batteries in Comparative Example 1 and Comparative Example 2, the first positive electrode active material and the second positive electrode active material within the ranges provided in this application are not selected, or the first end face of the first positive electrode active material layer does not extend beyond the second end face of the second positive electrode active material layer, so that the positive electrode plates thereof have lower main body adhesion force and/or edge adhesion force, indicating that the lithium-ion batteries cannot guarantee their own capacities while reducing the risk of peeling of the positive electrode active material layer.

The distance m₁ by which the first end face extends beyond the second end face generally affects the capacity of the lithium-ion battery and the risk of peeling of the positive electrode active material layer. It can be seen from Examples 1-1 to 1-5 that electrochemical apparatuses with the distance m₁ by which the first end face extends beyond the second end face within the ranges provided in this application have higher main body adhesion force and edge adhesion force, and also have higher capacity, indicating that the positive electrode active material layer has lower risk of peeling and the lithium-ion batteries have higher capacity. Although the capacity of the lithium-ion battery of Example 1-4 is higher than those of Examples 1-1 to 1-3, the distance m₁ by which the first end face extends beyond the second end face is too small, so high requirements are imposed on the processing technology in actual production processes, which increases the production cost of the lithium-ion battery and is not conducive to industrial mass production.

When the third end face extends beyond the fourth end face, the distance m₁ by which the first end face extends beyond the second end face and the distance m₂ by which the third end face extends beyond the fourth end face generally affect the capacity of the lithium-ion battery and the risk of peeling of the positive electrode active material layer. It can be seen from Examples 1-6 to 1-10 that the electrochemical apparatuses with the distance m₁ by which the first end face extends beyond the second end face and the distance m₂ by which the third end face extends beyond the fourth end face within the ranges provided in this application have higher main body adhesion force and edge adhesion force, and also have higher capacity, indicating that the positive electrode active material layer has lower risk of peeling and the lithium-ion batteries have higher capacity. Although the capacity of the lithium-ion battery of Example 1-9 is higher than those of Examples 1-6 to 1-8, the distance m₁ by which the first end face extends beyond the second end face and the distance m₂ by which the third end face extends beyond the fourth end face are too small, so high requirements are imposed on the processing technology in actual production processes, which increases the production cost of the lithium-ion battery and is not conducive to industrial mass production.

The types of the first positive electrode active material and the second positive electrode active material generally affect the capacity of the lithium-ion battery and the risk of peeling of the positive electrode active material layer. It can be seen from Example 1-1 and Examples 1-11 to 1-13 that the electrochemical apparatuses with the types of the first positive electrode active material and the second positive electrode active material within the ranges provided in this application have higher main body adhesion force and edge adhesion force, and also have higher capacity, indicating that the positive electrode active material layer has lower risk of peeling and the lithium-ion batteries have higher capacity.

**Table 2**

| | Percentage of first positive electrode active material (%) | Percentage of first conductive agent (%) | Percentage of first binder (%) | Percentage of second positive electrode active material (%) | Percentage of second conductive agent (%) | Percentage of second binder (%) | N₁ (%) | N₂ (%) | Main body adhesion force (N/m) | Edge adhesion force (N/m) | Capacity (mAh) |
|---|---|---|---|---|---|---|---|---|---|---|---|
| Example 1-1 | 97.1 | 1.4 | 1.5 | 97.5 | 1.0 | 1.5 | 30 | 70 | 8 | 8 | 820 |
| Example 2-1 | 97.1 | 1.4 | 1.5 | 97.5 | 1.0 | 1.5 | 95 | 5 | 8 | 8 | 960 |
| Example 2-2 | 97.1 | 1.4 | 1.5 | 97.5 | 1.0 | 1.5 | 70 | 30 | 8 | 8 | 906 |
| Example 2-3 | 97.1 | 1.4 | 1.5 | 97.5 | 1.0 | 1.5 | 40 | 60 | 8 | 8 | 842 |
| Example 2-4 | 97.1 | 1.4 | 1.5 | 97.5 | 1.0 | 1.5 | 5 | 95 | 8 | 8 | 766 |
| Example 2-5 | 95 | 2 | 3 | 95 | 3 | 2 | 30 | 70 | 12 | 12 | 803 |
| Example 2-6 | 98 | 1.5 | 0.5 | 98 | 1.5 | 0.5 | 30 | 70 | 4 | 4 | 827 |
| Example 2-7 | 94.5 | 3 | 2.5 | 94.5 | 3 | 2.5 | 30 | 70 | 15 | 15 | 799 |
| Example 2-8 | 98.5 | 1.2 | 0.3 | 98.5 | 1.2 | 0.3 | 30 | 70 | 3 | 3 | 831 |

Based on a total mass of the first positive electrode active material and the second positive electrode active material, a mass percentage of the second positive electrode active material generally affects the capacity of the lithium-ion battery and the risk of peeling of the positive electrode active material layer. It can be seen from Example 1-1 and Examples 2-1 to 2-4 that the electrochemical apparatuses with the mass percentage of the second positive electrode active material within the ranges provided in this application have higher main body adhesion force and edge adhesion force, and also have higher capacity, indicating that the positive electrode active material layer has lower risk of peeling and the lithium-ion batteries have higher capacity.

Percentages of the first binder in the first positive electrode active material layer and the second binder in the second positive electrode active material layer generally affect the capacity of the lithium-ion battery and the risk of peeling of the positive electrode active material layer. It can be seen from Example 1-1 and Examples 2-5 to 2-8 that the electrochemical apparatuses with the percentages of the first binder in the first positive electrode active material layer and the second binder in the second positive electrode active material layer within the ranges provided in this application have higher main body adhesion force and edge adhesion force, and also have higher capacity, indicating that the positive electrode active material layer has lower risk of peeling and the lithium-ion batteries have higher capacity.

**Table 3**

| | First positive electrode active material | a (mAh/g) | Second positive electrode active material | b (mAh/g) | (a-b)/b × 100% | Negative electrode active material | c (mAh/g) | CW₁ (mg/1540.24 mm²) | CW₂ (mg/1540.24 mm²) | Main body adhesion force (N/m) | Edge adhesion force (N/m) | Capacity (mAh) |
|---|---|---|---|---|---|---|---|---|---|---|---|---|
| Example 1-1 | NCM60-10-30 | 180 | LiFe_{0.4}Mn_{0.6}PO₄ | 140 | 29% | Artificial graphite | 340 | 260 | 135 | 8 | 8 | 820 |
| Example 3-1 | NCM50-20-30 | 160 | LiFe_{0.4}Mn_{0.6}PO₄ | 140 | 14% | Artificial graphite | 340 | 260 | 135 | 8 | 8 | 808 |
| Example 3-2 | NCM80-10-10 | 210 | LiFe_{0.2}Mn_{0.8}PO₄ | 120 | 75% | Artificial graphite | 340 | 260 | 135 | 8 | 8 | 830 |
| Example 3-3 | NCM33-33-33 | 150 | LiFe_{0.4}Mn_{0.6}PO₄ | 140 | 7% | Artificial graphite | 340 | 260 | 135 | 8 | 8 | 802 |
| Example 3-4 | NCM90-5-5 | 220 | LiFe_{0.2}Mn_{0.8}PO₄ | 120 | 83% | Artificial graphite | 340 | 260 | 135 | 8 | 8 | 838 |
| Example 3-5 | NCM90-5-5 | 220 | LiFe_{0.4}Mn_{0.6}PO₄ | 140 | 57% | Artificial graphite | 340 | 260 | 135 | 8 | 8 | 844 |
| Example 3-6 | NCM60-10-30 | 180 | LiFe_{0.3}Mn_{0.7}PO₄ | 130 | 38% | Artificial graphite | 340 | 260 | 135 | 8 | 8 | 816 |
| Example 3-7 | NCM60-10-30 | 180 | LiFe_{0.1}Mn_{0.9}PO₄ | 110 | 64% | Artificial graphite | 340 | 260 | 135 | 8 | 8 | 808 |
| Example 3-8 | NCM60-10-30 | 180 | LiFe_{0.5}Mn_{0.5}PO₄ | 150 | 20% | Artificial graphite | 340 | 260 | 135 | 8 | 8 | 824 |
| Example 3-9 | NCM60-10-30 | 180 | LiFe_{0.4}Mn_{0.6}PO₄ | 140 | 29% | Artificial graphite | 280 | 260 | 135 | 8 | 8 | 820 |
| Example 3-10 | NCM60-10-30 | 180 | LiFe_{0.4}Mn_{0.6}PO₄ | 140 | 29% | Artificial graphite + silicon (mass 3wt%) | 420 | 260 | 135 | 8 | 8 | 820 |
| Example 3-11 | NCM60-10-30 | 180 | LiFe_{0.4}Mn_{0.6}PO₄ | 140 | 29% | Artificial graphite | 260 | 260 | 135 | 8 | 8 | 820 |
| Example 3-12 | NCM60-10-30 | 180 | LiFe_{0.4}Mn_{0.6}PO₄ | 140 | 29% | Artificial graphite + silicon (mass 5wt%) | 440 | 260 | 135 | 8 | 8 | 820 |
| Example 3-13 | NCM60-10-30 | 180 | LiFe_{0.4}Mn_{0.6}PO₄ | 140 | 29% | Artificial graphite | 340 | 200 | 135 | 9 | 9 | 706 |
| Example 3-14 | NCM60-10-30 | 180 | LiFe_{0.4}Mn_{0.6}PO₄ | 140 | 29% | Artificial graphite | 340 | 600 | 135 | 4 | 4 | 1463 |
| Example 3-15 | NCM60-10-30 | 180 | LiFe_{0.4}Mn_{0.6}PO₄ | 140 | 29% | Artificial graphite | 340 | 620 | 135 | 3 | 3 | 1501 |
| Example 3-16 | NCM60-10-30 | 180 | LiFe_{0.4}Mn_{0.6}PO₄ | 140 | 29% | Artificial graphite | 340 | 260 | 200 | 6 | 6 | 978 |
| Example 3-17 | NCM60-10-30 | 180 | LiFe_{0.4}Mn_{0.6}PO₄ | 140 | 29% | Artificial graphite | 340 | 260 | 300 | 4 | 4 | 1220 |
| Example 3-18 | NCM60-10-30 | 180 | LiFe_{0.4}Mn_{0.6}PO₄ | 140 | 29% | Artificial graphite | 340 | 260 | 320 | 3 | 3 | 1269 |

| | | | | | | | | | | | | |
|---|---|---|---|---|---|---|---|---|---|---|---|---|
| Note: In Table 3, a chemical formula of NCM50-20-30 is LiNi_{0.5}Co_{0.2}Mn_{0.3}O₂, a chemical formula of NCM80-10-10 is LiNi_{0.8}Co_{0.1}Mn_{0.1}O₂, a chemical formula of NCM33-33-33 is LiNi_{1/3}C_{1/3}Mn_{1/3}O₂, and a chemical formula of NCM90-5-5 is LiNi_{0.9}Co_{0.05}Mn_{0.05}O₂. | | | | | | | | | | | | |

A gram capacity a of the first positive electrode active material, a gram capacity b of the second positive electrode active material, and a value of (a-b)/b × 100% generally affect the capacity of the lithium-ion battery and the risk of peeling of the positive electrode active material layer. It can be seen from Example 1-1 and Examples 3-1 to 3-8 that the electrochemical apparatuses with the gram capacity a of the first positive electrode active material, the gram capacity b of the second positive electrode active material, and (a-b)/b × 100% within the ranges provided in this application have higher main body adhesion force and edge adhesion force, and also have higher capacity, indicating that the positive electrode active material layer has lower risk of peeling and the lithium-ion batteries have higher capacity. Although the capacities of the lithium-ion batteries of Examples 3-2, 3-4, 3-5 and 3-8 are higher than those of Example 1-1 and Example 3-1, and the lithium-ion batteries of Examples 3-2, 3-4, 3-5 and 3-8 have higher production cost, which is not conducive to industrial mass production. A gram capacity c of the negative electrode active material generally affects the capacity of the lithium-ion battery and the risk of peeling of the positive electrode active material layer. It can be seen from Example 1-1 and Examples 3-9 to 3-12 that the electrochemical apparatuses with the gram capacity c of the negative electrode active material within the ranges provided in this application have higher main body adhesion force and edge adhesion force, and also have higher capacity, indicating that the positive electrode active material layer has lower risk of peeling and the lithium-ion batteries have higher capacity.

A coating weight of the positive electrode active material layer generally affects the capacity of the lithium-ion battery and the risk of peeling of the positive electrode active material layer. It can be seen from Example 1-1 and Examples 3-13 to 3-15 that the electrochemical apparatuses with the coating weight of the positive electrode active material layer within the ranges provided in this application have higher main body adhesion force and edge adhesion force, and also have higher capacity, indicating that the positive electrode active material layer has lower risk of peeling and the lithium-ion batteries have higher capacity. Although the capacity of the lithium-ion battery of Example 3-15 is higher than those of Example 1-1 and Examples 3-13 and 3-14, the lithium-ion battery of Example 3-15 has higher production cost, which is not conducive to industrial mass production.

A coating weight of the negative electrode active material layer generally affects the capacity of the lithium-ion battery and the risk of peeling of the positive electrode active material layer. It can be seen from Example 1-1 and Examples 3-16 to 3-18 that the electrochemical apparatuses with the coating weight of the negative electrode active material layer within the ranges provided in this application have higher main body adhesion force and edge adhesion force, and also have higher capacity, indicating that the positive electrode active material layer has lower peeling risk and the lithium-ion batteries have higher capacity. Although the capacity of the lithium-ion battery of Example 3-18 is higher than those of Example 1-1 and Examples 3-16 and 3-17, the lithium-ion battery of Example 3-18 has higher production cost, which is not conducive to industrial mass production.

It should be noted that, in this specification, relational terms such as first and second are only used to distinguish one entity or operation from another entity or operation, and do not necessarily require or imply any such actual relationship or order between these entities or operations. Moreover, the terms "include", "comprise", or any other variations thereof are intended to cover non-exclusive inclusion, so that a process, method, article or device including a series of elements not only includes those elements, but also includes other elements not explicitly listed, or also includes elements inherent to such process, method, article or device.

All embodiments in this specification are described in a related manner, and the same and similar parts between these embodiments may refer to each other, and each embodiment focuses on differences from other embodiments.

The above are only preferred embodiments of this application and are not intended to limit this application. Any modifications, equivalent replacements, improvements, and the like made within the spirit and principles of this application shall be included within the protection scope of this application.

## Claims

1. An electrochemical apparatus, comprising a positive electrode plate wherein the positive electrode plate comprises a positive electrode current collector and a positive electrode active material layer disposed on at least one surface of the positive electrode current collector the positive electrode active material layer comprises a first positive electrode active material layer and a second positive electrode active material layer; the first positive electrode active material layer is disposed on the surface of the positive electrode current collector and the second positive electrode active material layer is disposed on a surface of the first positive electrode active material layer away from the positive electrode current collector;
the first positive electrode active material layer comprises a first positive electrode active material; the first positive electrode active material comprises at least one of lithium cobalt oxide, lithium nickel cobalt manganese oxide, lithium nickel cobalt aluminum oxide, or lithium manganese oxide; the second positive electrode active material layer comprises a second positive electrode active material; the second positive electrode active material comprises at least one of lithium iron manganese phosphate or lithium iron phosphate; and
along a width direction of the unfolded positive electrode plate the first positive electrode active material layer comprises a first end face and a third end face opposite to the first end face, the second positive electrode active material layer comprises a second end face and a fourth end face opposite to the second end face, the first end face and the second end face are located on a first side of the positive electrode plate, the third end face and the fourth end face are located on a second side of the positive electrode plate and the first side opposite to the second side;
wherein along the width direction of the unfolded positive electrode plate, the first end face extends beyond the second end face, and the fourth end face does not extend beyond the third end face.

2. The electrochemical apparatus according to claim 1, wherein along a thickness direction of the unfolded positive electrode plate, a projection of the second positive electrode active material layer on the positive electrode current collector is located within a projection of the first positive electrode active material layer on the positive electrode current collector.

3. The electrochemical apparatus according to claim 1, wherein a distance of the first end face beyond the second end face is m₁, and 0.2 mm ≤ m₁ ≤ 2 mm.

4. The electrochemical apparatus according to claim 1, wherein a distance of the third end face beyond the fourth end face is m₂, and 0.2 mm ≤ m₂ ≤ 2 mm.

5. The electrochemical apparatus according to claim 1, wherein the first positive electrode active material layer further comprises a first conductive agent and a first binder, and based on a mass of the first positive electrode active material layer, a mass percentage of the first positive electrode active material is 95% to 98%, a mass percentage of the first conductive agent is 0.5% to 3%, and a mass percentage of the first binder is 0.5% to 3%; and/or
the second positive electrode active material layer further comprises a second conductive agent and a second binder, and based on a mass of the second positive electrode active material layer, a mass percentage of the second positive electrode active material is 95% to 98%, a mass percentage of the second conductive agent is 0.6% to 3%, and a mass percentage of the secondbinder is 0.5% to 2%.

6. The electrochemical apparatus according to claim 1, wherein a gram capacity of the first positive electrode active material is a, and a gram capacity of the second positive electrode active material is b, satisfying: 10% ≤ (a-b)/b × 100% ≤ 75%, and 160 mAh/g ≤ a ≤ 210 mAh/g.

7. The electrochemical apparatus according to claim 6, wherein 14% ≤ (a-b)/b × 100% ≤ 30%.

8. The electrochemical apparatus according to claim 6, wherein 120 mAh/g ≤ b ≤ 140 mAh/g.

9. The electrochemical apparatus according to claim 1, wherein along the width direction of the unfolded positive electrode plate, the positive electrode active material layer comprises a main body portion and an edge portion, and the edge portion is a portion of the first positive electrode active material layer extending beyond the second positive electrode active material layer; and
based on a total mass of the first positive electrode active material and the second positive electrode active material in the main body portion, a mass percentage of the second positive electrode active material is 5% to 95%.

10. The electrochemical apparatus according to claim 9, wherein based on the total mass of the first positive electrode active material and the second positive electrode active material in the main body portion, the mass percentage of the second positive electrode active material is 5% to 60%.

11. The electrochemical apparatus according to claim 9, wherein in the main body portion, a coating weight of the positive electrode active material layer is 200 mg/1540.24 mm² to 600 mg/1540.24 mm².

12. The electrochemical apparatus according to claim 9, wherein a CB value of the electrochemical apparatus satisfies: 1.04 ≤ CB ≤ 1.2.

13. The electrochemical apparatus according to claim 12, wherein a CB value of the edge portion is greater than or equal to a CB value of the main body portion.

14. The electrochemical apparatus according to claim 1, wherein the electrochemical apparatus further comprises a negative electrode plate the negative electrode plate comprises a negative electrode current collector and a negative electrode active material layer disposed on at least one surface of the negative electrode current collector, and a coating weight of the negative electrode active material layer is 100 mg/1540.24 mm² to 300 mg/1540.24 mm².

15. The electrochemical apparatus according to claim 14, wherein the negative electrode active material layer comprises a negative electrode active material, and a gram capacity of the negative electrode active material is 280 mAh/g to 420 mAh/g.

16. The electrochemical apparatus according to any one of claims 1 to 15, wherein along a length direction of the unfolded positive electrode plate, a length of the first positive electrode active material layer is greater than a length of the second positive electrode active material layer.

17. An electronic apparatus, comprising the electrochemical apparatus according to any one of claims 1 to 16.
